# EUROPÄISCHE PATENTSCHRIFT

(11) **EP 2 582 632 B1**
(45) Veröffentlichungstag und Bekanntmachung des Hinweises auf die Patenterteilung: **11.05.2016**
(21) Anmeldenummer: 10778842.4
(22) Anmeldetag: 27.08.2010
(51) Int. Cl.: C02F 1/66, C02F 5/02, C02F 1/469

(54) **VERFAHREN ZUR AUFBEREITUNG EINES SALZHALTIGEN ROHWASSERS**
METHOD FOR TREATING UNTREATED SALT WATER FOR PRODUCING TREATED WATER
PROCÉDÉ DE TRAITEMENT D'EAU NON TRAITÉE SALÉE POUR PRODUIRE DE L'EAU TRAITÉE

(30) Priorität: 21.06.2010 DE 102010017490
(43) Veröffentlichungstag der Anmeldung: 24.04.2013
(73) Patentinhaber: WME Gesellschaft für windkraftbetriebene Meerwasserentsalzung mbH, 18556 Dranske/Rügen (DE)
(72) Erfinder: HUSS, Rainer, 87474 Buchenberg (DE); WODRICH, Rene, 17493 Greifswald (DE); PLANTIKOW, Ulrich, 81373 München (DE)
(74) Vertreter: Kuhnen & Wacker
(86) Internationale Anmeldenummer: PCT/EP2010/005285
(87) Internationale Veröffentlichungsnummer: WO 2011/160663

(56) Entgegenhaltungen:
- DE-A1- 2 400 712
- DE-A1- 10 217 885
- DE-C2- 3 342 016
- GB-A- 2 117 261
- US-A- 3 128 248
- US-A- 3 350 292
- US-A- 3 742 421
- US-A- 3 932 275
- US-A- 3 965 013
- US-A- 4 036 749
- US-A- 4 141 825
- US-A1- 2005 098 499
- US-A1- 2005 155 541
- US-A1- 2005 189 280
- US-A1- 2009 001 020
- US-A1- 2009 211 760
- EL-MANHARAWY S ET AL: "Study of seawater alkalization as a promising RO pretreatment method", DESALINATION, ELSEVIER, AMSTERDAM, NL, Bd. 153, Nr. 1-3, 10. Februar 2003 (2003-02-10), Seiten 109-120, XP004410499, ISSN: 0011-9164, DOI: DOI:10.1016/S0011-9164(02)01110-4
- M. BADRUZZAMAN ET AL.: "Innovative beneficial reuse of reverse osmosis concentrate using bipolarmembrane electrodialysis and electrochlorination processes", JOURNAL OF MEMBRANE SCIENCE, Bd. 326, 2009, Seiten 392-399, XP002621267, DOI: doi:10.1016/j.memsci.2008.10.018
- TONGWEN XU AND CHUANHUI HUANG: "Electrodialysis-Based SeparationTechnologies: A Critical Review", AICHE JOURNAL, Bd. 54, Nr. 12, Dezember 2008 (2008-12), Seiten 3147-3159, XP002621268, DOI: doi:10.1002/aic.11643

## Beschreibung

Die vorliegende Erfindung betrifft ein Verfahren zur Aufbereitung eines salzhaltigen Rohwassers nach Anspruch 1.

Natürliche Salzwässer, wie beispielsweise Meerwasser, vergleichbar salzhaltige Grundwässer, Wässer mit noch höheren Salzkonzentrationen, wie beispielsweise Meerwasserkonzentrat, natürliche oder künstlich erzeugte Solen mit einem Salzgehalt von wenigstens 0,4 bis über 20 Gew.-% werden für eine Reihe von Anwendungen eingesetzt:
Sie dienen bei der Trinkwassergewinnung mittels Meerwasserentsalzung als Rohstoff bzw. Rohwasser mit einem üblichen Salzgehalt im Bereich von ca. 1 bis 5 Gew.-%.

Ferner dienen diese natürlichen Salzwässer als Quelle zur Gewinnung von kristallinem Salz für die chemische Industrie, Lebensmittelproduktion, Wasseraufbereitung, wie z. B. Einsatz als Ionentauschersalz, Streusalz und dergleichen.

Zudem finden natürliche Salzwässer Einsatz als Heilsole im Wellnessbereich und im medizinischen Badebetrieb, wobei diese häufig eine sehr hohe Salzkonzentration aufweisen.

Bei den meisten der vorstehend genannten Anwendungen sind in natürlichen Salzwässern Stoffe vorhanden, welche während der Anwendung zur Ausbildung von wasserunlöslichen Krusten führen können. Insbesondere können Erdalkalimetallionen, wie beispielsweise Mg²⁺, Ca²⁺, Sr²⁺ und Ba²⁺, bei Temperaturerhöhung, vor allem in Verbindung mit einem Unterdruck, durch CO₂-Freisetzung aus der Salzlösung bei der Verarbeitung in den entsprechenden Vorrichtungen als eine schwerlösliche Kruste ausfallen:

Mg(HCO₃)₂ → Mg(OH)₂↓ + 2 CO₂↑

Ca(HCO₃)₂ → CaCO₃↓ + CO₂↑ + H₂O

Sr(HCO₃)₂ → SrCO₃ + CO₂↑ + H₂O

Ba(HCO₃)₂ BaCO₃↓ + CO₂↑ + H₂O

Eine derartige Kruste ist hart und haftet meistens stark auf dem Untergrund, wodurch eine spätere mechanische Entfernung erschwert wird.

Neben den Verkrustungen stören bei vielen Anwendungen ungelöste, feine, teils schwebende Partikel, wie beispielsweise Sand oder Algen, sowie gelöste organische Stoffe, wie beispielsweise Fischschleim, Erdöl-, Treibstoff- und Bilgenwasserbestandteile, sowie Rückstände von nicht oder unzureichend gereinigtem Abwasser.

So ist aus dem Dokument DE 102 178 85 A1, auf das hiermit vollinhaltlich Bezug genommen wird, ein Verfahren zur elektrochemischen Konditionierung eines Mediums wie Meerwasser oder dergleichen für dessen Entsalzung bekannt. Dabei werden die vorstehend beschriebenen störenden Verkrustungen und Ablagerungen durch Vorkonditionieren des entsprechenden Rohwassers, wie beispielsweise Meerwasser, zumindest weitgehend vermieden.

Hierdurch wird es möglich, bei einer Meerwasserentsalzungsanlage oder dergleichen, ohne externe Zugabe einer Säure, auf elektrochemischem Wege den pH-Wert im Konzentrat während des Einengens durch Verdunstung konstant zu halten oder abzusenken.

Dabei können jedoch bestimmte Arten von Verschmutzungen im Salzwasser, wie beispielsweise Erdalkalimetallionen sowie gelöste oder ungelöste Fremdstoffe, zu einer Beeinträchtigung der elektrochemischen Reaktion führen.

Aus dem Dokument US 3,350,292 ist ein Verfahren zur Gewinnung von Trinkwasser aus Meerwasser bekannt, bei welchem dem Meerwasser ein löslicher alkalischer Stoff zu gegeben wird, um das Hydrogencarbonat im Wesentlichen vollständig in Carbonat zu überführen. Ferner wird Natriumcarbonat zugegeben, um das Calcium im Wesentlichen vollständig abreagieren zu lassen; ferner Abtrennen das resultierende Calciumcarbonat zusammen mit den Eisen- und Aluminiumionen als Hydroxide auszufällen. Nachfoldend werden die Magnesiumionen von dem derart behandelten Meerwasser entfernt, kostengünstige Mineralsäuren zugegeben, das derart behandelte Meerwasser in ein Trinkwasserprodukt und ein salzhaltiges Konzentrat getrennt; und wenigstens teilweises Wiedereinstellen der Natriumwerte des Natriumchlorids im salzhaltigen Konzentrat derart, dass es im Verfahren wiederverwendet werden kann.

Im Dokument US 2009/0001020 A1 wird ein Verfahren zur Entsalzung von Meerwasser offenbart, mit den Schritten: Bereitstellen eines Ausgangswassers; Unterziehen des Ausgangswassers einem Entsalzungsvorgang, um ein entsaltzes Produktwasser und eine Abfallsole zu erzeugen, wobei dieser Schritt wenigstens die Fällung einer Carbonatverbindungs umfaßt.

Es ist daher eine Aufgabe der vorliegenden Erfindung, ein Verfahren bereitzustellen, mittels dessen Erdalkalimetallionen sowie gelöste oder ungelöste Fremdstoffe, insbesondere Partikel und organische Stoffe, wenigstens weitgehend aus einem aufzubereitenden, salzhaltigen Rohwasser auf einfache und effektive Weise zu entfernen.

Es ist ein Aspekt der vorliegenden Erfindung, ein Prozesswasser bereitzustellen, das ohne weitere Aufbereitung als Katholyt in einem Elektrodialyseverfahren verwendet werden kann.

Weiterhin wird eine Vorrichtung zur Durchführung des erfindungsgemäßen Verfahrens beschrieben.

Die vorstehende Aufgabe wird gelöst durch das Verfahren zur Aufbereitung eines salzhaltigen Rohwassers mit den Merkmalen des Anspruchs 1.

Erfindungsgemäß wird damit erstmals ein Verfahren vorgeschlagen, bei dem einem salzhaltigen Rohwasser eine Hydroxidionen-haltige Lösung zugegeben wird, wodurch die in dem salzhaltigen Rohwasser gelösten Erdalkalimetallionen als schwerlösliche Hydroxide oder Carbonate in Gestalt eines unlöslichen Feststoffs in der Mischung gefällt und somit aus der flüssigen Phase abgeschieden werden.

Zum Fällen der Erdalkalimetallionen werden beispielsweise die folgenden Reaktionen eingesetzt:

MgCl₂ + 2 NaOH → Mg(OH)₂↓ + 2 NaCl

CaCl₂ + CO₂ + 2 NaOH → CaCO₃↓ + 2 NaCl

SrCl₂ + CO₂ + 2 NaOH → SrCO₃↓ + 2 NaCl

BaCl₂ + CO₂ + 2 NaOH → BaCO₃↓ + 2 NaCl

Erfindungsgemäß wird unter einer wässerigen, Hydroxidionen-haltigen Lösung eine wasserbasierte Flüssigkeit verstanden, die Hydroxidionen enthält. Hierunter fallen alle wässerigen Lösungen, die Hydroxid in gelöster Form enthalten, aber auch alle geeigneten Suspensionen und Emulsionen, die Hydroxidionen aufweisen.

Dabei ist besonders vorteilhaft, dass die vorstehend genannten, mittels des erfindungsgemäßen Verfahrens erzeugten Fällprodukte, nämlich Erdalkalimetallhydroxide und -carbonate, gleichzeitig als Fällungshilfsmittel dienen, um aus dem eingesetzten Rohwasser auch andere unerwünschte Fremdstoffe, wie beispielsweise Partikel oder gelöste organische Stoffe, mitzufällen. Hierbei werden die unerwünschten Fremdstoffe in die sich bei der Feststoffällung ausbildenden Flocken eingeschlossen.

Der sich auf vorstehend beschriebene Weise als Flocken ausgebildete Feststoff sedimentiert unter Ausbildung eines klaren Überstandes. Schließlich wird durch Abziehen des im Wesentlichen klaren Überstandes ein gebrauchsfertiges Prozesswasser gewonnen, das sich aufgrund seiner hohen Konzentration an Chloridionen beispielsweise zum Einsatz als Katholyt in einem Elektrodialyseverfahren eignet.

Erfindungsgemäß wird unter Abziehen des Prozesswassers ein Abtrennen oder Gewinnen des Prozesswassers aus dem klaren Überstand der Mischung verstanden, der im Wesentlichen keinen Feststoff enthält.

Dabei ist das salzhaltige Rohwasser ein natürliches oder künstlich hergestelltes Salzwasser, vorzugsweise ein Meerwasser, ein Brackwasser, ein Grundwasser, ein Quellwasser, eine natürliche oder künstlich hergestellte Sole, oder Mischungen oder Konzentrate derselben.

Damit können für das erfindungsgemäße Verfahren als Rohwasser praktisch alle natürlich vorhandenen oder künstlich hergestellten, salzhaltigen Wässer eingesetzt werden. So setzt das erfindungsgemäße Verfahren einen im Wesentlichen ubiquitär vorhandenen Rohstoff ein, woraus sich ein breiter geographischer Einsatzbereich ergibt. Derartige salzhaltige Gewässer stehen praktisch überall und kostengünstig zur Verfügung.

Weiter erfolgt in Schritt (b) das Einströmen der wässerigen, Hydroxidionen-haltigen Lösung in das in einem Reaktionsgefäß vorgelegte salzhaltige Rohwasser im Wesentlichen in tangentialer Richtung, wobei das Reaktionsgefäß vorzugsweise eine im Wesentlichen zylindrische oder zylindrokonische Gestalt aufweist. Oder in Schritt (b) erfolgt das Einströmen des salzhaltigen Rohwassers in die in das Reaktionsgefäß vorgelegte wässerige, Hydroxidionen-haltige Lösung im Wesentlichen in tangentialer Richtung, wobei das Reaktionsgefäß vorzugsweise eine im Wesentlichen zylindrische oder zylindrokonische Gestalt aufweist.

Durch die tangentiale Einströmung wird eine intensive Vermischung des Rohwassers mit der wässerigen, Hydroxidionen-haltigen Lösung und Homogenisierung der resultierenden Mischung erzielt.

Zudem findet nur eine geringe Scherbelastung beim Mischen statt, wodurch eine Zerstörung des sich bei der Fällungsreaktion ausbildenden, flockigen Feststoffs weitgehend vermieden wird.

Ferner wird der gesamte Flüssigkeitskörper in eine Rotationsbewegung versetzt, wodurch auf ein zusätzliches Rührwerk oder andere Einbauten, wie beispielsweise Strömungsbrecher, vorteilhaft verzichtet werden kann.

In Schritt (b) liegt die Einströmgeschwindigkeit des salzhaltigen Rohwassers und/oder der wässerigen, Hydroxidionen-haltigen Lösung im Bereich von 1 bis 3 m/s, insbesondere 2 bis 2,5 m/s.

Hierdurch wird nicht nur eine optimale Durchmischung, sondern auch ein schnelles Absetzen des sich ausbildenden, flockigen Feststoffs erzielt.

Ferner wird die Bildung von instabilen und feindispers suspendierten Schwebepartikeln mit geringer Absetzneigung vermieden.

Vorteilhafte Weiterbildungen des erfindungsgemäßen Aufbereitungsverfahrens sind Gegenstand der abhängigen Ansprüche 2 bis 9.

Zudem kann das salzhaltige Rohwasser einen Salzgehalt, insbesondere einen Gehalt von Alkalimetallsalzen, bis zur Sättigung, vorzugsweise im Bereich von 0,4 bis 25 Gew.-%, noch bevorzugter 2 bis 10 Gew.-%, insbesondere 2,8 bis 4,6 Gew.-%, aufweisen.

Hierdurch wird es vorteilhaft möglich, hochsalzhaltige Wässer, wie beispielsweise hochsalzhaltige Industrieabwässer, Meerwasserkonzentrate, oder beispielsweise natürliche Meerwässer mit hohen Salzkonzentrationen, wie beispielsweise das Wasser des Toten Meeres, im Rahmen des erfindungsgemäßen Verfahrens einzusetzen. Andererseits lässt sich auch Meerwasser mit einem durchschnittlichen Salzgehalt problemlos als Rohwasser mit dem erfindungsgemäßen Verfahren einsetzen.

Ferner kann die wässerige, Hydroxidionen-haltige Lösung aus dem in Schritt (d) gewonnenen Prozesswasser erzeugt werden.

Damit besteht erfindungsgemäß die Möglichkeit, das Prozesswasser im Sinne eines Recyclingverfahrens nach Einsatz in einem elektrochemischen Verfahren als wässerige, Hydroxidionen-haltige Lösung wiederzuverwerten.

Hierdurch werden vorteilhaft die Prozesskosten gesenkt, die Mengen an Roh- und Abfallstoffen minimiert, wodurch sich die Umweltverträglichkeit des erfindungsgemäßen Verfahrens erheblich verbessert.

Insbesondere kann die wässerige, Hydroxidionen-haltige Lösung mittels eines Elektrodialyseverfahrens erzeugt werden.

Hierbei werden vorteilhaft die Hydroxidionen-haltigen Lösungen, die als Abfallprodukt in einem Elektrodialyseverfahren anfallen, gemäß dem vorliegenden Verfahren wie vorstehend beschrieben als Fällungsmittel verwendet. Hierdurch wird aus Sicht des Elektrodialyseverfahrens ein Entsorgungsproblem der Hydroxidionen-haltigen Abwässer einerseits gelöst, während andererseits eine Rohstoffquelle für das erfindungsgemäße Verfahren bereitgestellt wird.

Darüber hinaus kann die wässerige, Hydroxidionen-haltige Lösung einen Gehalt an Kohlenstoffdioxid bis zur Sättigung, vorzugsweise im Bereich von 0,5 bis 5 g/L, insbesondere 1 bis 3 g/L, aufweisen.

Hierdurch wird die Fällung der Erdalkalimetallionen in Form von Carbonaten, wie vorstehend beschrieben, vorteilhaft verbessert.

Dabei kann das Kohlenstoffdioxid aus einem anderen Verfahren, wie beispielsweise aus einem thermischen Meerwasser-Entsalzungsverfahren, stammen. Alternativ kann das Kohlenstoffdioxid auch der Luft durch Verrieselung der Hydroxidionen-haltigen Lösung, beispielsweise in einem Absorptions-Rieselturm, entnommen werden.

Besonders bevorzugt beträgt der Überschuss an Kohlenstoffdioxid in der wässerigen, Hydroxidionen-haltigen Lösung in Bezug auf die vorstehend beschriebenen Fällungsreaktionen vorzugsweise zwischen 30 und 100 %.

Erfindungsgemäß kann die Mischung einem pH-Wert im Bereich von 11 bis 14, vorzugsweise im Bereich von 12 bis 14, insbesondere ≥ 13, aufweisen.

Durch einen Überschuss an Hydroxidionen in der wässerigen, Hydroxidionen-haltigen Lösung, der vorzugsweise zwischen 30 und 100 % beträgt, wird eine im Wesentlichen quantitative Fällung der Erdalkalimetallionen aus der Mischung bewirkt. Damit gelingt es vorteilhaft, ein im Wesentlichen Erdalkalimetallionen-freies Prozesswasser als Erzeugnis des erfindungsgemäßen Verfahrens zu erzielen. Folglich lässt sich das erzeugte Prozesswasser unmittelbar als Katholyt im Rahmen eines Elektrodialyseverfahrens einsetzen. Hierdurch kann eine membranschädigende Wirkung, die auf Erdalkalimetallionen im Elektrolyt zurückzuführen ist, praktisch ausgeschlossen werden.

Ein Überschuss an Kohlenstoffdioxid und/oder Hydroxidionen hat ferner den Vorteil, dass eine im Wesentlichen quantitative Fällung selbst bei stark schwankenden Rohwasserqualitäten sichergestellt werden kann.

Des Weiteren kann in Schritt (b) die Mischung durch Einströmen der wässerigen, Hydroxidionen-haltigen Lösung in das salzhaltige Rohwasser erzeugt werden.

Hierdurch kann die anlagentechnische Umsetzung des Verfahrens aufgrund von kleineren Speichergefäßen für die wässerige, Hydroxidionen-haltige Lösung vereinfacht werden.

Das Verfahren kann ferner den Schritt aufweisen:
e) nach Schritt (b) Beaufschlagen der Mischung mit Kohlenstoffdioxid.

Durch das Vorhandensein von Kohlenstoffdioxid in der wässerigen, Hydroxidionen-haltigen Lösung wird der Fällprozess, insbesondere hinsichtlich der Erdalkalimetallionen Ca²⁺, Sr²⁺ und Ba²⁺, vorteilhaft begünstigt. Hierdurch wird nämlich die quantitative Fällung der vorstehend genannten Ionen in Gestalt deren Carbonate und damit deren Entfernung aus dem Prozesswasser erleichtert.

Des Weiteren kann das erfindungsgemäße Verfahren ferner den Schritt aufweisen:
f) nach Schritt (d) Einstellen des pH-Wertes des Prozesswassers auf einen vorbestimmten Wert.

Zudem kann das Verfahren ferner den Schritt aufweisen:
g) nach Schritt (d) Beaufschlagen des Prozesswassers mit Kohlenstoffdioxid.

Darüber hinaus kann das Verfahren ferner den Schritt aufweisen:
h) nach Schritt (d) Beaufschlagen des Prozesswassers mit Salzsäure.

Durch die Konditionierung des erzeugten Prozesswassers mittels Beaufschlagung mit Kohlenstoffdioxid, Salzsäure und/oder Einstellung des pH-Wertes kann das Prozesswasser vorteilhaft auf die optimalen Bedingungen für seine weitere Verwendung, beispielsweise in einem Elektrodialyseverfahren, eingestellt werden.

Weiter kann das Verfahren ferner den Schritt aufweisen:
i) Nach einem der Schritte (d), (f), (g) oder (h) Unterlassen einer Zugabe weiterer Stoffe zum Prozesswasser.

Das mittels des erfindungsgemäßen Verfahrens gewonnene Prozesswasser kann ohne die Zugabe weiterer Stoffe verwendet werden. Damit wird nicht nur die Verwendung weiterer Hilfsstoffe, wie beispielsweise Chemikalien, kostengünstig vermieden, sondern es entfällt auch ein weiterer Misch- und/oder Homogenisierschritt, der seinerseits wiederum entsprechende anlagentechnische Vorraussetzungen erfordern würde.

Ferner kann das Verfahren den Schritt aufweisen:
j) nach Schritt (d) Abführen des sedimentierten Feststoffs.

Der ferner durch Sedimentieren des sich aus der Mischung ausgebildeten Feststoffs entstandene Dünnschlamm kann separat abgezogen werden und als Abfallstoff entsorgt werden. Alternativ lässt sich dieser Dünnschlamm auch als Wertstoff für den Fall einsetzen, dass das zu seiner Erzeugung eingesetzte Rohwasser einen vergleichsweise hohen Reinheitsgrad aufwies (sogenanntes Blauwasser).

Sofern der Dünnschlamm nämlich keine oder nur einen geringen Gehalt an organischen Stoffen enthält, lässt er sich zur Aufhärtung von demineralisiertem Wasser, wie es beispielsweise in einer Meerwasserentsalzungsanlage entsteht, einsetzen. Hierzu wird die Feststoffsuspension des Dünnschlamms salzfrei gewaschen und mit CO₂ versetzt im demineralisierten Wasser aufgelöst.

Nachdem die Schlammpartikel frisch gefällt wurden, sind sie sehr klein und weisen eine große innere Oberfläche auf. Deshalb lösen sie sich dabei innerhalb weniger Minuten beispielsweise in demineralisiertem Wasser vollständig auf. Diese Aufkalkung kann vorteilhafterweise in einem Inline-System mit sehr kleiner Bauweise erfolgen.

Darüber kann in Schritt (b) das volumenbezogene Mischungsverhältnis des salzhaltigen Rohwassers zur wässerigen, Hydroxidionen-haltigen Lösung im Bereich von 50 bis 90 zu 50 bis 10, vorzugsweise 55 bis 70 zu 45 bis 30, insbesondere 60 zu 40, betragen.

Dank diesem Mischungsverhältnis ist es möglich, eine im Wesentlichen quantitative Ausfällung der Erdalkalimetallionen zu erreichen. Hierbei liegt nämlich der pH-Wert der entstehenden Mischung in einem hochalkalischen Bereich, vorzugsweise in einem Bereich von 12 bis 14. Dadurch ist die Konzentration der Hydroxidionen in der resultierenden Mischung ausreichend hoch, um eine praktisch quantitative Fällung der Erdalkalimetallionen des Rohwassers zu erzielen.

In Schritt (c) kann der Feststoff so lange sedimentiert werden, bis sich die Gesamtheit des Feststoffs im Wesentlichen in einem Volumen befindet, das höchstens 60, vorzugsweise höchstens 40, insbesondere höchstens 25 % des Gesamtvolumens der Mischung beträgt.

Durch diese hohe Konzentrierung kann folglich ein großes Volumen an Prozesswasser in kurzer Zeit erzeugt werden, wodurch die Effizienz des erfindungsgemäßen Verfahrens erhöht wird.

Das mit dem erfindungsgemäßen Verfahren hergestellte Prozesswasser kann im Wesentlichen frei von gelösten Erdalkalimetallionen, insbesondere von Mg²⁺, Ca²⁺, Sr²⁺ und Ba²⁺, sein.

Nachdem die vorstehend genannten Erdalkalimetallionen Elektrodialysemembranen bekanntermaßen schädigen, ist das mit dem erfindungsgemäßen Verfahren erzeugte Prozesswasser für den Einsatz als Katholyt in einem Elektrodialyseverfahren geeignet.

Zudem kann das Prozesswasser im Wesentlichen frei von Fremdstoffen, insbesondere von Partikeln und/oder organischen Stoffen, sein.

Hierdurch wird eine Verschmutzung von Anlagenteilen bei der weiteren Verwendung des Prozesswassers, insbesondere in Gestalt eines Katholyts für ein Elektrodialyseverfahren, weitgehend vermieden. Zudem entfallen weitere kostenträchtige und anlagentechnisch aufwendige Reinigungsmaßnahmen.

In einem anderen, nicht beanspruchten Aspekt wird eine Vorrichtung zur Durchführung eines Verfahrens vorgeschlagen, die wenigstens aufweist:
- ein Reaktionsgefäß, vorzugsweise zur Durchführung wenigstens eines der Schritte (a) bis (d);
- ein Speichergefäß, vorzugsweise zur Speicherung der wässerigen, Hydroxidionen-haltigen Lösung.

Dabei weist das Reaktionsgefäß eine Einströmeinrichtung zum tangentialen Einströmen des salzhaltigen Rohwassers und/oder der wässerigen, Hydroxidionen-haltigen Lösung auf.

Durch tangentiales Einströmen im Bereich eines zylindrischen Abschnitts des Reaktionsgefäßes lässt sich die Mischung am einfachsten und mit geringstem Energieaufwand Homogenisieren und/oder in Rotation versetzen.

Vorteilhafte Weiterbildungen der Vorrichtung sindnachfolgend beschrieben. Die Vorteile des erfindungsgemäßen Verfahrens gelten analog.

So kann die Einströmeinrichtung im Bereich einer Wand, vorzugsweise einer Seitenwand, des Reaktionsgefäßes angeordnet sein.

Zudem kann das Reaktionsgefäß eine im Wesentlichen zylindrische oder zylindrokonische Gestalt aufweisen.

Ferner kann das Reaktionsgefäß eine Auslassöffnung im unteren Wandbereich des Reaktionsgefäßes aufweisen.

Hierdurch kann der entstehende Feststoff bzw. Dünnschlamm dem Reaktionsgefäß auf einfache Weise getrennt vom Prozesswasser entnommen werden.

Besonders vorteilhaft ist es, wenn das Reaktionsgefäß keine weitere mechanische Homogenisiereinrichtung, insbesondere keinen Rührer oder Strömungsbrecher, aufweist.

Hierdurch werden der anlagentechnische Aufwand sowie der Reinigungsaufwand der Vorrichtung minimiert.

Schließlich kann das Speichergefäß einen Volumeninhalt von wenigstens 20 %, vorzugsweise etwa 30 bis 80 %, insbesondere etwa 75 %, des Reaktionsgefäßes aufweisen.

Die Erfindung wird in nachfolgenden Ausführungsbeispielen anhand der Figuren der Zeichnung näher erläutert. Es zeigt:
Fig. 1 eine schematische Übersicht über ein Elektrodialyse-System, bei dem das erfindungsgemäße Aufbereitungsverfahren sowie die zugehörige Vorrichtung zum Einsatz kommt;
Fig. 2 eine schematische Darstellung einer Vorrichtung zur Durchführung des erfindungsgemäßen Aufbereitungsverfahrens.

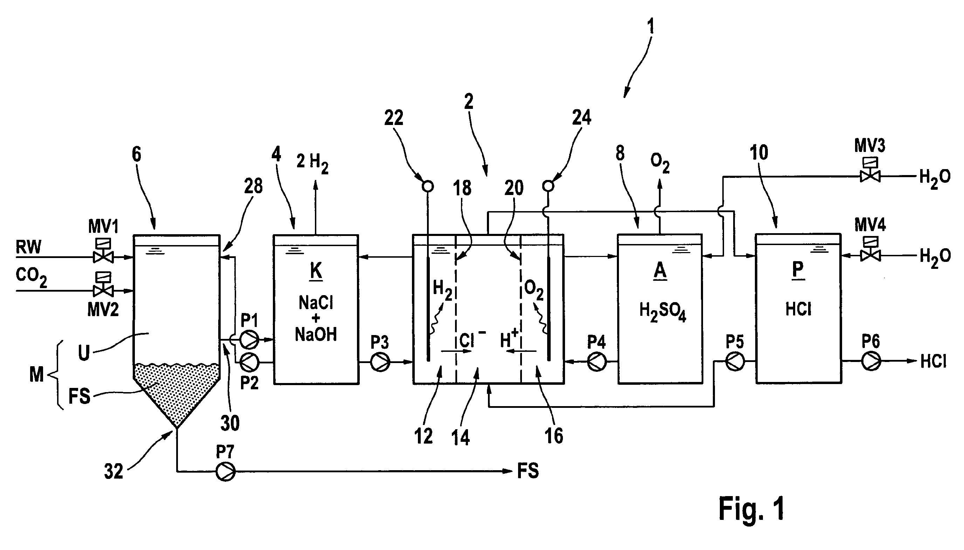

Das in Fig. 1 dargestellte Elektrodialyse-System 1 weist eine Elektrodialysezelle 2, ein Speichergefäß 4 für einen Katholyten K, ein Reaktionsgefäß 6, ein Speichergefäß 8 für einen Anolyten A sowie ein Speichergefäß 10 für ein Produkt P auf.

Die Elektrodialysezelle 2 weist einen Kathodenraum 12, einen Produktraum 14 und einen Anodenraum 16 auf. Dabei ist der Kathodenraum 12 vom Produktraum 14 durch eine Anionaustauscher-Membran 18 getrennt. Der Anodenraum 16 ist vom Produktraum 14 durch eine Kationenaustauscher-Membran 20 getrennt. Im Kathodenraum 12 ist eine Kathode 22, die vom Katholyten K umgeben ist, angeordnet. Analog ist im Anodenraum 16 eine Anode 24 die vom Anolyten A umgeben ist, angeordnet.

Das Speichergefäß 4 für den Katholyten K weist eine beliebige, vorzugsweise zylindrische, Gestalt auf. Das Reaktionsgefäß 6 weist eine zylindrische, vorzugsweise zylindrokonische Gestalt auf. Das Speichergefäß 8 für den Anolyten A sowie das Speichergefäß 10 für das Produkt können eine beliebige Gestalt aufweisen.

Ferner weist das Elektrodialyse-System 1 nicht näher beschriebene Rohrleitungen, Pumpen, Ventile und dergleichen auf, mit denen die einzelnen Gefäße, wie beispielsweise die Elektrodialysezelle 2, das Speichergefäß 4, das Reaktionsgefäß 6, das Speichergefäß 8 und das Speichergefäß 10 miteinander verbunden sind und womit Rohstoffe, Zwischenprodukte und Endprodukte innerhalb des Elektrodialyse-Systems 1 transportiert werden können.

Im Anodenraum 16 der Elektrolysezelle 2 findet die nachfolgende Anodenreaktion statt:

2 H₂O → 4H⁺ + O₂↑ + 4e⁻

Reaktionsgemäß verliert der Anolyt A an Wasser, während Protonen und gasförmiger Sauerstoff an der Anode freigesetzt werden. Dabei weist der Anolyt A Schwefelsäure auf, die zur Verbesserung der Leitfähigkeit dient, aber während der Anodenreaktion nicht umgesetzt wird.

Im Kathodenraum 20 findet die sogenannte Kathodenreaktion statt:

2 NaCl + 2 H₂O + 2e⁻ → 2 NaOH + 2 Cl⁻ + H₂↑

Infolge der Ionenwanderung durch die Membran nimmt die Konzentration an Chloridionen im Katholyt K ab. Dagegen nimmt die Konzentration an Hydroxidionen zu. Ferner wird an der Kathode 22 gasförmiger Wasserstoff freigesetzt.

Aus dem Kathodenraum 12 wandern Chloridionen durch die Anionenaustauscher-Membran 18. Dagegen wandern aus dem Anodenraum 16 Protonen durch die Kationenaustauscher-Membran 20. Im Produktraum 14 vereinigen sich diese beiden Ionenarten zum erwünschten Produkt Chlorwasserstoff HCl bzw. einer wässerigen Lösung derselben, nämlich Salzsäure. Der im Kathodenraum 12 der Elektrodialysezelle 2 enthaltene Katholyt K wird ständig über das Speichergefäß 4 mittels einer Pumpe umgewälzt. Hierdurch ist es möglich, den Katholyten K durch Abgabe von Wasserstoffgas zu entgasen und ihn gleichzeitig durch Zuführung von Chloridionen von außen in das Speichergefäß 4 mit Chloridionen anzureichern.

Schließlich kann der Katholyt K durch Umwälzen in das Speichergefäß 4 auf eine für die Kathodenreaktion optimale Chloridionen-Konzentration eingestellt werden.

Bedingt durch die vorstehend beschriebene Anodenreaktion verliert der Anolyt A im Anodenraum 16 ständig Wasser, während an der Anode gasförmiger Sauerstoff entsteht. Durch Umwälzung des Anolyten A in das Speichergefäß 8 kann der Anolyt A durch Abführen von Sauerstoffgas wirksam entgast werden. Ferner wird die Konzentration des Anolyten A durch Zuführen von vollentsalztem Wasser auf die Ausgangskonzentration vor der Reaktion verdünnt.

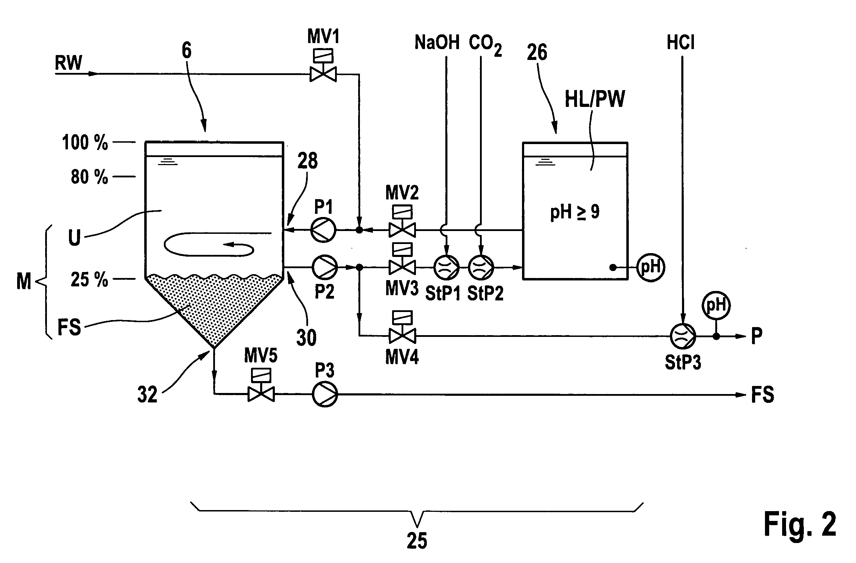

Fig. 2 zeigt eine schematische Darstellung einer Vorrichtung 25 mit einem Reaktionsgefäß 6 und einem Speichergefäß 26 für ein Prozesswasser PW. Dabei weist das Reaktionsgefäß 6 eine zylindrokonische Gestalt auf. Ferner weist das Reaktionsgefäß 6 eine Einströmeinrichtung 28 in einem zylindrischen Bereich des Reaktionsgefäßes 6, eine Ausströmeinrichtung 30 sowie eine Auslassöffnung 32 im Konus des Reaktionsgefäßes 6 auf.

Die Einströmeinrichtung 28 erlaubt eine zum Umfang des Reaktionsgefäßes 6 tangentiale Einströmung einer Flüssigkeit. Die Einströmvorrichtung 28 ist über eine Leitung mit dem Speichergefäß 4 für den Katholyten K verbunden. Zudem ist die Ausströmeinrichtung 30 über eine Leitung mit dem Speichergefäß 4 für den Katholyten K verbunden.

Beim erfindungsgemäßen Aufbereitungsverfahren wird von einem gefüllten Speichergefäß 26 ausgegangen, wobei der darin enthaltene Katholyt K aufgrund der Kathodenreaktion an Hydroxidionen angereichert ist und an Chloridionen abgereichert ist. Das Reaktionsgefäß 6 wird mit Rohwasser RW, beispielsweise salzhaltiges Meerwasser, bis zu einem Volumeninhalt von 80 % gefüllt. Dann wird das Reaktionsgefäß 6 mit der wässerigen, Hydroxidionen-haltigen Lösung HL, welcher der verbrauchte Katholyt K ist, auf 100 % des Volumens des Reaktionsgefäßes 6 aufgefüllt. Dabei wird die wässerige, Hydroxidionen-haltige Lösung HL über eine Einströmeinrichtung 28 in das Reaktionsgefäß 6 eingebracht, wobei aufgrund der tangentialen Einströmung eine Kreisströmung des im Reaktionsgefäß 6 befindlichen Flüssigkeitsvolumens erzeugt.

Aufgrund der vorstehend beschriebenen Fällungsreaktionen werden insbesondere die Erdalkalimetallionen des Rohwassers RW durch den Überschuss an Hydroxidionen aus der Hydroxidionen-haltigen Lösung HL in ihre schwerlöslichen Hydroxide umgesetzt. Enthält die wässerige Hydroxidionen-haltige Lösung HL ferner Kohlenstoffdioxid, kommt es auch zur Ausfällung von schwerlöslichen Erdalkalimetall-Carbonaten.

Die in Gestalt von Flocken ausfallenden Feststoffe FS lässt man so lange im Reaktionsgefäß 6 sedimentieren, bis der ausgefallene Feststoff FS einen unteren Schlammpegel von 10 bis 40 %, vorzugsweise 25 %, des Gesamtvolumens des Reaktionsgefäßes 6 geringfügig unterschritten hat. Ein klarer Überstand U kann aus dem Reaktionsgefäß 6 als gereinigtes bzw. aufbereitetes Prozesswasser PW abgezogen werden. Dabei werden etwa 60 bis 90 %, vorzugsweise etwa 75 %, des Volumens des Reaktionsgefäßes 6 als Prozesswasser PW abgezogen und in das Speichergefäß 26 eingebracht.

Mittels den Strahlpumpen StP1 und StP2 kann Natronlauge und/oder Kohlenstoffdioxid dem Prozesswasser PW jeweils in einer definierten Menge oder pH-Wert-geregelt zugemischt werden.

Das derart erzeugte Prozesswasser PW kann entweder als Rohstoff für die Meerwasserentsalzung eingesetzt werden. Insbesondere kann das Chloridionenreiche und Hydroxidionen-arme Prozesswasser PW als frischer Katholyt K für die Kathodenreaktion verwendet werden. Über die Strahlpumpe StP3 kann dem Prozesswasser PW erforderlichenfalls HCl in einer definierten Menge oder pH-Wert-geregelt zugemischt werden.

Der insgesamt abgezogene Volumenanteil von etwa 60 bis 90 %, vorzugsweise etwa 75 %, des Reaktionsgefäßes 6 wird als Katholyt K für die Kathodenreaktion eingesetzt.

Der verbleibende Volumenanteil von etwa 10 bis 40 %, vorzugsweise etwa 25 %, des Inhalts des Reaktionsgefäßes 6 wird als Dünnschlamm über die Auslassöffnung 32 abgezogen und entsorgt. Vorzugsweise wird der als Dünnschlamm suspendierte Feststoff FS jedoch, sofern er nur wenig oder keine organischen Stoffe enthält, zur Aufhärtung von destilliertem Wasser verwendet. Hierzu wird er salzfrei gewaschen und mit Kohlenstoffdioxid versetzt im demineralisierten Wasser aufgelöst.

Da frisch gefällte Schlammpartikel sehr klein sind und eine große innere Oberfläche aufweisen, lösen sie sich in wenigen Minuten vollständig auf. Dabei kann die Aufkalkung vorteilhaft mit einem sogenannten Inline-System mit sehr kompakter Bauweise erfolgen.

Erfindungsgemäß werden unter Salz alle bekannten Salze, vorzugsweise Alkalimetallsalze und/oder Erdalkalimetallsalze, weiter bevorzugt Salze mit Halogenidionen als Anion, insbesondere NaCl, oder Mischungen derselben verstanden.

Die Erfindung lässt neben den erläuterten Ausführungsbeispielen weitere Gestaltungsansätze zu.

So kann das Speichergefäß 4 für den Katholyten K gleichzeitig auch als Speichergefäß für das Prozesswasser PW verwendet werden. Hierdurch kann vorteilhaft ein Speichergefäß eingespart werden.

Darüber hinaus kann die Mischung M in ein im Wesentlichen zylindrisches oder zylindrokonisches Reaktionsgefäß 6 tangential eingeströmt werden.

Ferner ist das Reaktionsgefäß 6 nicht auf eine im Wesentlichen zylindrische oder zylindrokonische Gestalt beschränkt. So kann das Reaktionsgefäß 6 auch eine elliptische oder mehreckige, insbesondere vier- bis achteckige, Querschnittsgestalt aufweisen. Falls die Querschnittsgestalt des Reaktionsgefäßes 6 eine Mehrzahl von Ecken aufweist, können diese abgerundet sein. Ferner kann das Reaktionsgefäß 6 auch eine im Wesentlichen kugelförmige Gestalt aufweisen.

Wie oben dargelegt wurde, kann das Prozesswasser PW vorteilhaft zur Erzeugung von Chlorwasserstoff bzw. Salzsäure verwendet werden. Im Hinblick auf weitere Details hierzu wird vollinhaltlich Bezug auf den Inhalt der zeitgleich hinterlegten Patentanmeldung derselben Anmelderin mit dem Titel: "Verfahren zur Erzeugung von Chlorwasserstoff oder einer wässerigen Lösung derselben unter Verwendung eines salzhaltigen Rohwassers, damit hergestelltes Produkt, Verwendung des Produkts und Elektrodialyse-System" (anmelderseitiges Aktenzeichen: 11/WM09K06/DE) genommen.

## Patentansprüche

1. Verfahren zur Aufbereitung eines salzhaltigen Rohwassers (RW), mit den Schritten:
a) Bereitstellen des salzhaltigen Rohwassers (RW);
wobei das salzhaltige Rohwasser (RW) ein natürliches oder künstlich hergestelltes Salzwasser, vorzugsweise ein Meerwasser, ein Brackwasser, ein Grundwasser, ein Quellwasser, eine natürliche oder künstlich hergestellte Sole, oder Mischungen oder Konzentrate derselben, ist;
b) Erzeugung einer Mischung (M) durch Mischen des salzhaltigen Rohwassers (RW) mit einer wässerigen, Hydroxidionen-haltigen Lösung (HL);
c) Sedimentieren des sich aus der Mischung (M) ausbildenden Feststoffs (FS) unter Ausbildung eines im Wesentlichen klaren Überstandes (U); und
d) Abziehen eines Prozesswassers (PW) aus dem im Wesentlichen klaren Überstand (U);
wobei in Schritt (b) das Einströmen der wässerigen, Hydroxidionen-haltigen Lösung (HL) in das in einem Reaktionsgefäß (6) vorgelegte salzhaltige Rohwasser (RW) im Wesentlichen in tangentialer Richtung erfolgt; oder
wobei in Schritt (b) das Einströmen des salzhaltigen Rohwassers (RW) in die in das Reaktionsgefäß (6) vorgelegte wässerige, Hydroxidionen-haltige Lösung (HL) im Wesentlichen in tangentialer Richtung erfolgt; und
wobei in Schritt (b) die Einströmgeschwindigkeit des salzhaltigen Rohwassers (RW) oder der wässerigen, Hydroxidionen-haltigen Lösung (HL) im Bereich von 1 bis 3 m/s, insbesondere 2 bis 2,5 m/s, liegt.

2. Verfahren nach Anspruch 1, **dadurch gekennzeichnet, dass** das salzhaltige Rohwasser (RW) einen Salzgehalt, insbesondere einen Gehalt von Alkalimetallsalzen, bis zur Sättigung, vorzugsweise im Bereich von 0,4 bis 25 Gew.-%, noch bevorzugter 2 bis 10 Gew.-%, insbesondere 2,8 bis 4,6 Gew.-%, aufweist.

3. Verfahren nach Anspruch 1 oder 2, **dadurch gekennzeichnet, dass** die wässerige, Hydroxidionen-haltige Lösung (HL) aus dem in Schritt (d) gewonnenen Prozesswasser (PW) erzeugt wird.

4. Verfahren nach wenigstens einem der Ansprüche 1 bis 3, **dadurch gekennzeichnet, dass** die wässerige, Hydroxidionen-haltige Lösung (HL) mittels eines Elektrodialyseverfahrens erzeugt wird.

5. Verfahren nach wenigstens einem der Ansprüche 1 bis 4, **dadurch gekennzeichnet, dass** die wässerige, Hydroxidionen-haltige Lösung (HL) einen Gehalt an Kohlenstoffdioxid bis zur Sättigung, vorzugsweise im Bereich von 0,5 bis 5 g/L, insbesondere 1 bis 3 g/L, aufweist.

6. Verfahren nach wenigstens einem der Ansprüche 1 bis 5, **dadurch gekennzeichnet, dass** die Mischung (M) einen pH-Wert im Bereich von 11 bis 14, vorzugsweise im Bereich von 12 bis 14, insbesondere ≥ 13, aufweist.

7. Verfahren nach wenigstens einem der Ansprüche 1 bis 6, **dadurch gekennzeichnet, dass** das Verfahren ferner den Schritt aufweist:
e) nach Schritt (b) Beaufschlagen der Mischung (M) mit Kohlenstoffdioxid.

8. Verfahren nach wenigstens einem der Ansprüche 1 bis 7, **dadurch gekennzeichnet, dass** das Verfahren ferner den Schritt aufweist:
i) nach dem Schritt (d) Unterlassen einer Zugabe weiterer Stoffe zum Prozesswasser (PW).

9. Verfahren nach wenigstens einem der Ansprüche 1 bis 8, **dadurch gekennzeichnet, dass** in Schritt (b) das volumenbezogene Mischungsverhältnis des salzhaltigen Rohwassers (RW) zur wässerigen, Hydroxidionen-haltigen Lösung (HL) im Bereich 50 bis 90 zu 50 bis 10, vorzugsweise 55 bis 70 zu 45 bis 30, insbesondere 60 zu 40, beträgt.

## Claims

1. A method of treating an untreated saline water (RW), including the steps of:
a) furnishing the untreated saline water (RW);
wherein the untreated saline water (RW) is a natural or synthetically produced salt water, preferably a sea water, a brackish water, a subsurface water, a ground water, a spring water, a natural or synthetically produced brine, or mixtures or concentrates thereof;
b) producing a mixture (M) by mixing the untreated saline water (RW) with an aqueous solution (HL) containing hydroxide ions;
c) sedimenting the solid matter (FS) forming from the mixture (M) with concurrent formation of a substantially clear supernatant (U); and
d) withdrawing a process water (PW) from the substantially clear supernatant (U); wherein in step (b) the flow introduction of the aqueous solution (HL) containing hydroxide ions into the untreated saline water (RW) that was charged into a reaction vessel (6) substantially takes place in a tangential direction; or
in step (b) the flow introduction of the untreated saline water (RW) into the aqueous solution (HL) containing hydroxide ions that was charged into the reaction vessel (6) substantially takes place in a tangential direction; and
wherein in step (b) the inflow velocity of the untreated saline water (RW) or the aqueous solution (HL) containing hydroxide ions is in the range from 1 to 3 m/s, in particular 2 to 2.5 m/s.

2. The method according to claim 1, **characterized in that** the untreated saline water (RW) has a salt content, in particular a content of alkali metal salts, up to saturation, preferably in the range from 0.4 to 25 % (wt.), in a more preferred manner 2 to 10 % (wt.), in particular 2.8 to 4.6 % (wt.).

3. The method according to claim 1 or 2, **characterized in that** the aqueous solution (HL) containing hydroxide ions is produced from the process water (PW) obtained in step (d).

4. The method according to at least one of claims 1 to 3, **characterized in that** the aqueous solution (HL) containing hydroxide ions is produced by means of an electrodialysis process.

5. The method according to at least one of claims 1 to 4, **characterized in that** the aqueous solution (HL) containing hydroxide ions has a carbon dioxide content up to saturation, preferably in the range from 0.5 to 5 g/l, in particular 1 to 3 g/l.

6. The method according to at least one of claims 1 to 5, **characterized in that** the mixture (M) has a pH in the range from 11 to 14, preferably in the range from 12 to 14, in particular ≥ 13.

7. The method according to at least one of claims 1 to 6, **characterized in that** the method further includes the step of:
e) after step (b), application of carbon dioxide to the mixture (M).

8. The method according to at least one of claims 1 to 7, **characterized in that** the method further includes the step of:
i) after step (d), omitting an addition of further substances to the process water (PW).

9. The method according to at least one of claims 1 to 8, **characterized in that** in step (b), the volume-related mixing ratio of the untreated saline water (RW) to the aqueous solution (HL) containing hydroxide ions is in the range between (50 through 90) to (50 through 10), preferably between (55 through 70) to (45 through 30), in particular 60 to 40.

## Revendications

1. Procédé de traitement d'une eau brute (EB) salée, avec les étapes :
a) de mise à disposition de l'eau brute (EB) salée ;
où l'eau brute (EB) salée est une eau salée naturelle ou fabriquée artificiellement, de préférence une eau de mer, une eau saumâtre, une eau souterraine, une eau de source, une saumure naturelle ou fabriquée artificiellement, ou des mélanges ou concentrés de celles-ci ;
b) de réalisation d'un mélange (M) par la mixtion de l'eau brute (EB) salée avec une solution aqueuse contenant des ions hydroxydes (SH) ;
c) de sédimentation de la substance solide (SS) formée à partir du mélange (M), moyennant une formation d'un surnageant (S) dans l'ensemble clair ; et
d) de prélèvement d'une eau de procédé (EP) à partir du surnageant (S) dans l'ensemble clair ;
où, dans l'étape (b), l'apport de la solution aqueuse contenant des ions hydroxydes (SH) dans l'eau brute (EB) salée préalablement présente dans un récipient réactionnel (6) s'effectue dans l'ensemble dans une direction tangentielle ; ou
où, dans l'étape (b), l'apport de l'eau brute (EB) salée dans la solution aqueuse contenant des ions hydroxydes (SH) préalablement présente dans le récipient réactionnel (6) s'effectue dans l'ensemble dans une direction tangentielle ; et
où, dans l'étape (b), la vitesse d'introduction de l'eau brute (EB) salée, ou de la solution aqueuse contenant des ions hydroxydes (SH), se situe dans une gamme de 1 à 3 m/s, notamment de 2 à 2,5 m/s.

2. Procédé selon la revendication 1, **caractérisé en ce que** l'eau brute (EB) salée présente une teneur en sel, notamment une teneur en sels de métaux alcalins, jusqu'à la saturation, dans la gamme de 0,4 à 25 % en poids, de manière encore préférée de 2 à 10 % en poids, en particulier de 2,8 à 4,6 % en poids.

3. Procédé selon les revendications 1 ou 2, **caractérisé en ce que** la solution aqueuse contenant des ions hydroxydes (SH) est générée à partir de l'eau de procédé (EP) récupérée dans l'étape (d).

4. Procédé selon au moins l'une des revendications 1 à 3, **caractérisé en ce que** la solution aqueuse contenant des ions hydroxydes (SH) est générée au moyen d'un procédé d'électrodialyse.

5. Procédé selon au moins l'une des revendications 1 à 4, **caractérisé en ce que** la solution aqueuse contenant des ions hydroxydes (SH) présente une teneur en dioxyde de carbone jusqu'à la saturation de préférence dans la gamme de 0,5 à 5 g/l, notamment de 1 à 3 g/l.

6. Procédé selon au moins l'une des revendications 1 à 5, **caractérisé en ce que** le mélange (M) présente une valeur de pH dans la gamme de 11 à 14, de préférence dans la gamme de 12 à 14, notamment ≥ 13.

7. Procédé selon au moins l'une des revendications 1 à 6, **caractérisé en ce que** le procédé présente en outre l'étape :
e) après l'étape (b), de soumission du mélange (M) à du dioxyde de carbone.

8. Procédé selon au moins l'une des revendications 1 à 7, **caractérisé en ce que** le procédé présente en outre l'étape :
i) après l'étape (d), d'omission d'un ajout d'autres substances à l'eau de procédé (EP).

9. Procédé selon au moins l'une des revendications 1 à 8, **caractérisé en ce que**, dans l'étape (b), le rapport en volumes du mélange de l'eau brute (EB) salée et de la solution aqueuse contenant des ions hydroxydes (SH) est dans la gamme 50 à 90 pour 50 à 10, de préférence, 55 à 70 pour 45 à 30, notamment de 60 pour 40.
